## Europäisches Patentamt
## European Patent Office
## Office européen des brevets

(19)

(11) Veröffentlichungsnummer: **0 495 030 B1**

(12) **EUROPÄISCHE PATENTSCHRIFT**

(45) Veröffentlichungstag der Patentschrift: **09.11.94**

(51) Int. Cl.⁵: **B60T 8/32**, B60T 8/00

(21) Anmeldenummer: **91912851.2**

(22) Anmeldetag: **10.07.91**

(86) Internationale Anmeldenummer:
**PCT/EP91/01286**

(87) Internationale Veröffentlichungsnummer:
**WO 92/02392 (20.02.92 92/05)**

(54) **VERFAHREN ZUR SCHÄTZUNG DER GESCHWINDIGKEIT.**

(30) Priorität: **04.08.90 DE 4024815**

(43) Veröffentlichungstag der Anmeldung:
**22.07.92 Patentblatt 92/30**

(45) Bekanntmachung des Hinweises auf die
Patenterteilung:
**09.11.94 Patentblatt 94/45**

(84) Benannte Vertragsstaaten:
**DE FR GB IT SE**

(56) Entgegenhaltungen:
**WO-A-89/02382**
**US-A- 4 818 037**

(73) Patentinhaber: **ROBERT BOSCH GMBH**
**Postfach 30 02 20**
**D-70442 Stuttgart (DE)**

(72) Erfinder: **KOST, Friedrich**
**Johannes-Brahms-Strasse 1**
**D-7014 Kornwestheim (DE)**

(74) Vertreter: **Kammer, Arno, Dipl.-Ing.**
**ROBERT BOSCH GmbH**
**Zentralabteilung Patente**
**Postfach 30 02 20**
**D-70442 Stuttgart (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Stand der Technik

Bekannte Verfahren der Bremsschlupfregelung benutzen zur Berechnung des Bremsschlupfes, der durch

$$S = 1 - Vr/Vfr$$

definiert ist, anstatt der freirollenden (ungebremsten) Radumfangsgeschwindigkeit Vfr meist eine Referenzgeschwindigkeit Vref, die entweder radbezogen oder fahrzeugbezogen gebildet wird. Da i.a.

$$Vref \neq Vfr$$

gilt, entspricht auch der aus Vref berechnete "Relativschlupf"

$$Sref = 1 - Vr/Vref$$

nicht dem absoluten Schlupf. Ein Verfahren zur Gewinnung von Vref und die Regelung auf einen gewünschten Relativschlupf beschreibt z. B. WO 89/02382.

Vorteile der Erfindung

In manchen Anwendungsfällen (z. B. Regelung der Fahrzeuggierbewegung bzw. -querbewegung und Beobachter für Gier- und Querbewegung) ist es erforderlich, den absoluten Schlupf möglichst genau zu kennen.

Die Erfindung ermöglicht es, die tatsächlichen freirollenden Radumfanggeschwindigkeiten sowie die Fahrzeuglängsgeschwindigkeit abzuschätzen.

In den folgenden Absätzen wird die Erfindung unter Einbeziehung der Zeichnung näher erläutert. Die Figuren der Zeichnung zeigen:

Fig. 1 in schematisch dargestelltes Fahrzeug, in dem die benutzten Symbole eingezeichnet sind.

Fig. 2 die Darstellung der Bremskraft $F_B$ in Abhängigkeit vom Schlupf mit dem Schräglaufwinkel als Parameter

Fig. 3 den Verlauf verschiedener Größen über der Zeit und insbesondere die tatsächliche ($V_F$) und die geschätzte ($\hat{V}_F$) Fahrzeuggeschwindigkeit.

Fig. 4 ein Blockschaltbild eines Ausführungsbeispiels zur Durchführung des erfindungsgemäßen Verfahrens.

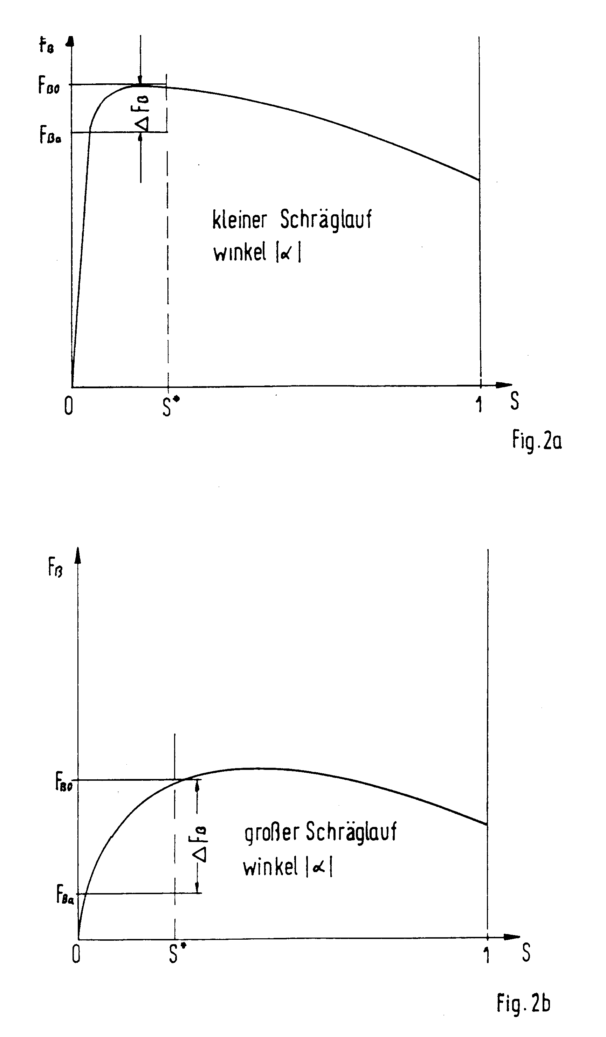

Eine Voraussetzung für dieses Verfahren ist, daß (mindestens) ein Fahrzeugrad von Zeit zu Zeit unterbremst wird. In diesen "Anpassungphasen" soll der Schlupf im (nahezu) linearen Bereich der $F_B(S)$-Kennlinie liegen (Fig. 2a). Um dies zu erreichen, wird ausgehend vom Bremskraftniveau, das sich im normalen (Schlupf-) Regelzustand einstellt, eine Absenkung um $\Delta F_B$ vorgenommen. Dies geschieht durch eine entsprechende Verminderung des Radbremszylinderdrucks. Damit die dadurch verursachte Verminderung der Abbremsung möglichst gering bleibt, sollten sich nicht mehrere Räder gleichzeitig im Anpassungszustand befinden.

Im Gegensatz zu bekannten Verfahren der Berechnung von Referenzgeschwindigkeiten erlaubt die Schätzung der Fahrzeuglängsgeschwindigkeit die Berechnung des absoluten physikalischen Schlupfes.

Die Kenntnis dieser Größe ist eine Voraussetzung zur Schätzung der Fahrzeugquerbewegung. Während man im allgemeinen bei der Optimierung der Reifenlängskräfte mit referenzbezogenene Schlupfwerten auskommt, benötigen zukünftige Fahrzeugregelungssysteme neben den Schräglaufwinkeln auch die absoluten Bremsschlupfwerte.

Das erfindungsgemäße Verfahren benutzt neben den Radgeschwindigkeitssignalen nur die in Fahrzeugregelungssystemen ohnehin vorhandenen fahrzeugkinematischen Grössen und die Schätzungen der Bremskräfte, sodaß kein zusätzlicher meßtechnischer Aufwand entsteht.

Ausgangspunkt sind folgende Filtergleichungen für die Fahrzeuglängsbewegung:

$$\frac{d\,\hat{Vf}}{dt} = \hat{b0} + b(t) + K1(t) * (Vf' - \hat{Vf}) \tag{1}$$

$$\frac{d\,\hat{b0}}{dt} = K2(t) * (Vf' - Vf) \tag{}$$

Darin ist

$$b(t) = -\frac{1}{mf} \sum_{i=1}^{4} F_B i(t) \tag{2}$$

die aus der Summe der Bremskräfte $F_{Bi}$ und der Fahrzeugmasse mf geschätzte Fahrzeugbeschleunigung. Da diese so berechnete Fahrzeugbeschleunigung infolge von Störeinflüssen wie z. B. einer Hangabtriebskraft fehlerhaftet ist, wird ein Fehlerterm b0 mitgeschätzt. Die beiden Korrekturverstärkungen K1(t) und K2(t) werden zu Null gewählt, wenn gerade keines der Räder im Anpassungszustand ist, andernfalls sind sie positiv. Sie können dann z. B. konstante vorgegebene Werte besitzen. Möglich ist aber auch der Einsatz eines Kalmanfilters, bei dem die Korrekturverstärkungen i.a. zeitlich veränderlich sind.

Der in Gl. (1) benutzte Korrekturwert Vf' wird im Anpassungszustand eines Rades gebildet. Dazu wird zunächst aus der Radumfangsgeschwindigkeit Vri und der Bremskraft $F_{Bi}$ des anpassenden Rades 1 dessen freirollende Radumfangsgeschwindigkeit Vfri' gemäß

$$Vfri' = \frac{Vri}{1 - FBi/ci} \tag{3}$$

bestimmt. Der Ausdruck $F_{Bi}/Ci$ in Gl. (3) entspricht dem Bremsschlupf S.

In Gl. (3) bedeutet ci die Längssteifigkeit des Reifens, welche eine näherungsweise bekannte Reifenkonstante ist.

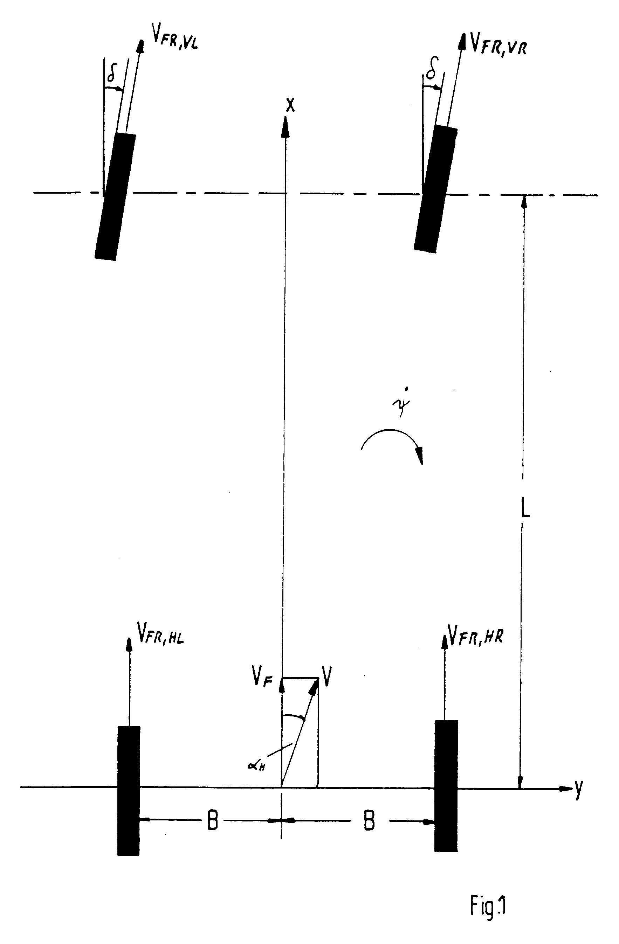

In einem zweiten Schritt erfolgt die Umrechnung der freirollenden Radgeschwindigkeit Vfri' auf einen festgelegten Fahrzeugpunkt, z. B. auf die Mitte der Hinterachse wie in Fig. 1 dargestellt. Mit den in Fig. 1 getroffenen Vorzeichenvereinbarungen für den Lenkwinkel δ und die Gierwinkelgeschwindigkeit $\dot{\psi}$ um die Fahrzeughochachse sowie dem Radstand L und der halben Spurweite B ergeben sich folgende Umrechnungsvorschriften:

$$Vf' = \begin{cases} \dfrac{Vfri' - \dot{\psi} * (L * \sin\delta + B * \cos\delta)}{\cos\delta + \tan\alpha_H * \sin\delta} & \text{falls } i = \text{vorne links,} \\[2ex] Vfri' + B * \dot{\psi} & \text{falls } i = \text{hinten rechts,} \\[2ex] \dfrac{Vfri' - \dot{\psi} * (L * \sin\delta - B * \cos\delta)}{\cos\delta + \tan\alpha_H * \sin\delta} & \text{falls } i = \text{vorne rechts,} \\[2ex] Vfri' - B * \dot{\psi} & \text{falls } i = \text{hinten links} \end{cases} \tag{4}$$

Für die Anwendung von Gl. (4) müssen $\delta$, $\dot{\psi}$ sowie der Schräglaufwinkel an der Hinterachse $\alpha_H$ bekannt sein. Wird diese Fahrzeuglängsgeschwindigkeitsbestimmung z. B. im Zusammenhang mit einem Fahrzeugregelungssystem mit einem Beobachter für die Fahrzeugquerbewegung eingesetzt, so stehen für $\delta$ und $\dot{\psi}$ i.a. Meßsignale zur Verfügung. Für $\alpha_H$ kann der in einem Beobachter gebildete Schätzwert für den Schräglaufwinkel der Hinterräder benutzt werden. Die Schräglaufwinkel der Räder einer Achse sind im allgemeinen nahezu identisch.

Mit den Gleichungen (1) bis (4) können Schätzwerte für die Fahrzeuglängsgeschwindigkeit und den Beschleunigungsfehler - Vf und $\hat{b}0$ - gewonnen werden. Aus Vf können mittels der zu Gleichung (4) inversen Umrechnungsvorschriften zu jeder Zeit die Schätzwerte Vfri für die freirollenden Radgeschwindig-keiten gebildet werden:

$$
Vfri = \begin{cases}
Vf * (\cos\delta + \tan\alpha_H * \sin\delta) + \dot{\psi} * (L * \sin\delta + B * \cos\delta) & \text{falls } i=VL \\
Vf - B * \dot{\psi} & \text{falls } i=HR \\
Vf * (\cos\delta + \tan\alpha_H * \sin\delta) + \dot{\psi} * (L * \sin\delta - B * \cos\delta) & \text{falls } i=VR \\
Vf + B * \dot{\psi} & \text{falls } i=HL
\end{cases} \quad (5)
$$

Die Schätzungen für die absoluten Bremsschlupfwerte sind dann

$$Si = 1 - Vri/\hat{V}fri, \quad i = 1....4$$

Zur Berrechnung der Fahrzeugbeschleunigung aus Gl. (2), zur Berechnung der freirollenden Radgeschwindigkeiten aus Gl. (3) und zur Realisierung der unterbremsten Anpassungsphasen ist die (ungefähre) Kenntnis der Bremskraft $F_Bi$ notwendig. Die Ausgangsgleichung zur Bestimmung dieser Kräfte ist der vereinfachte Drallsatz für das Rad i:

$$\frac{Ji}{ri} * \frac{d\,Vri}{dt} = - cpi' * Pi + F_Bi * ri \; . \qquad (7)$$

Mit

Pi      Radbremsdruck,

ri      Radradius,

Ji      Massenträgheitsmoment von Rad und Antriebstellen,

cpi     Bremsmomentverstärkung

Bei (näherungsweise) bekannten Systemparametern ri, ji und cpi läßt sich $F_Bi$ aus dem Radbremsdruck Pi mittls

$$F_Bi = \frac{1}{ri} * (\frac{Ji}{ri} * \frac{d\,Vri}{dt} + cpi * Pi) \qquad (8)$$

bestimmen. Falls der Radbremsdruck Pi nicht gemessen wird, kann statt Pi auch eine Schätzung für den Radbremsdruck benutzt werden. In den Phasen normaler Regelung auf einen Sollschlupf S* wird die momentane Bremskraft gemäß Gl. (8) gefiltert, z. B. unter Anwendung der Beziehung

$$\frac{d\,F_B0i}{dt} = K3 * (F_Bi - F_B0i), \qquad (9)$$

K3 ... vorzugebende Konstante.

Die Schätzung $F_B0i$ für das normale Bremskraftniveau wird als Bezugsgröße für die Bremskraft während der Anpassungsphasen benutzt. In diesen Phasen soll eine verminderte Bremskraft

$$F_Bai = F_B0i - \Delta F_Bi$$

eingestellt werden. Dies geschieht dadurch, daß der Radbremsdruck - bzw. dessen Schätzwert - auf

$$Pai = \frac{1}{cpi} * (F_Bai * ri - \frac{Ji}{ri} * (\overset{\wedge}{b0} + b(t)))) \qquad (11)$$

abgesenkt wird und danach gewartet wird, bis sich ein stationärer Verlauf von Vri(t) einstellt.

Die Bremskraftabsenkung $\Delta F_Bi$ in Gl. (10) wird abhängig von dem am anpassenden Rad herrschenden Schräglaufwinkel $\alpha i$ festgelegt. Dieser wird z. B. von einem Fahrzeugbeobachter geschätzt. Bei großem Schräglaufwinkel benötigt man nämlich ein grösseres $\Delta F_Bi$ um in den etwa linearen Bereich der Kurve $F_Bi$-(S) zu gelangen als bei kleinem Schräglaufwinkel (sh. Fig. 2a und 2b) 8a bei großen Bremskräften erfahrungsgemäß größere Schwankungen von $F_Bi$ auftreten als bei kleinen Bremskräften (z. B. wegen Radlaständerungen und elastischen Schwingungen in Reifen und Radaufhängung), dient es der Störsicherheit, wenn $\Delta F_Bi$ zusätzlich von $F_B0i$ abhängig gemacht wird:

$\Delta F_Bi = f(F_{B0i}, \alpha i)$, wobei $F_{B0i}$ das Bremsdruckniveau ist.     (12)

Als Funktion f eignet sich zum Beispiel

$f(F_{B0i}, \alpha i) = F0 + F_{B0i} * F1 + |\alpha i| * F2$, wobei     (13)

F0, F1, F2 ... vorzugebende Konstanten sind.
Da Fbai stets größer oder gleich Null sein soll, muß $\Delta F_Bi$ auf

$\Delta F_Bi \leq F_{B0i}$     (14)

begrenzt werden.

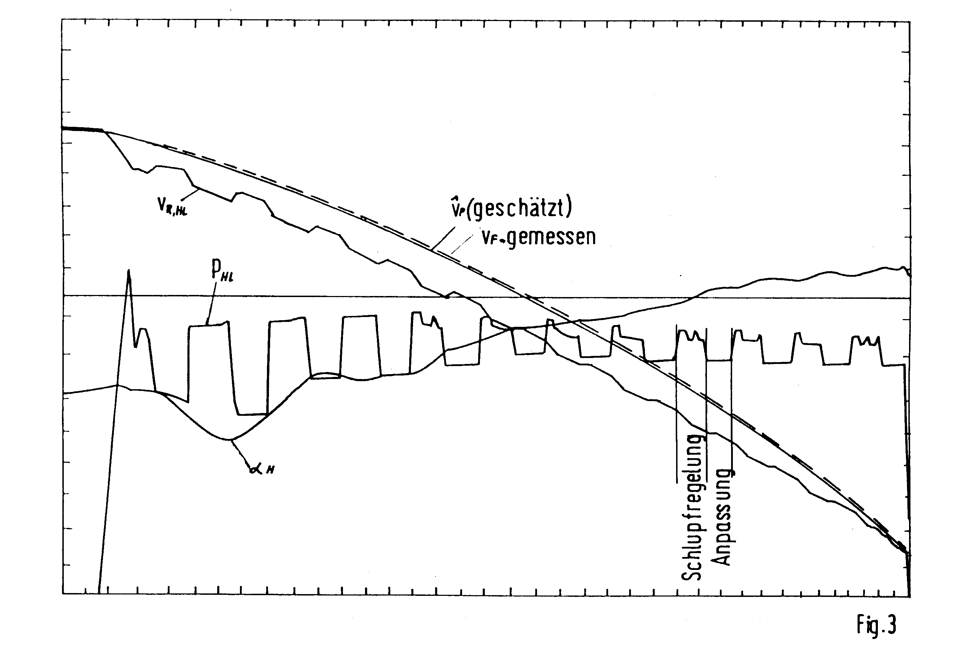

Fig. 3 zeigt ein Beispiel für die zeitlichen Verläufe von Vf, Vr__HL, P__HL, $\alpha_H$ und zum Vergleich den exakten Verlauf von Vf. In diesem Beispiel werden ausschließlich die beiden Hinterräder zur Vf-Schätzung herangezogen und dazu wechselseitig unterbremst.

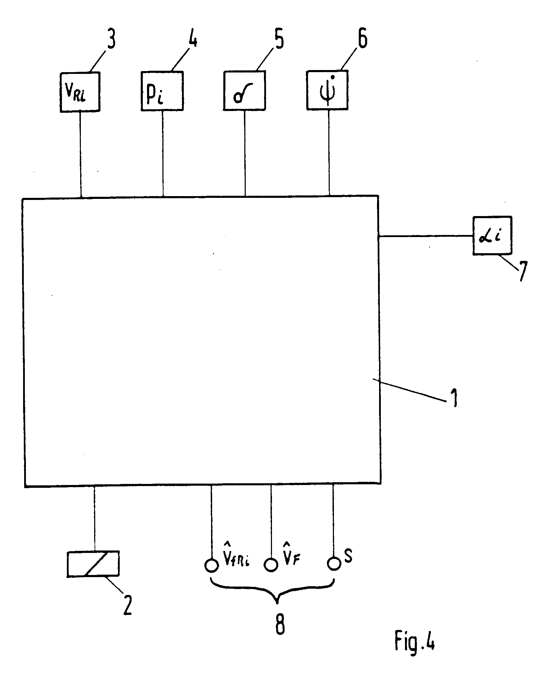

Beim Ausführungsbeispiel der Fig. 4 ist ein Rechner 1 gezeigt, der von Zeit zu Zeit mittels eines Magnetventils 2 den Bremsdruck an einem Rad absenkt. In diesen Phasen wird die Radgeschwindigkeit $V_{Ri}$ mittels des Sensors 3 und der Bremsdruck Pi an diesem Rad gemessen (Sensor 4). Außerdem wird der Lenkwinkel $\delta$ (Sensor 5) und die Giergeschwindigkeit $\dot{\psi}$ (Sensor 6) gemessen. Ein Beobachter 7 bestimmt den Schräglaufwinkel. Der Rechner führt nun die oben angegebenen Berechnungen durch und kann an den Klemmen 8 der geschätzten Geschwindigkeit $V_{fRi}$ des freirollenden Rads, der geschätzten Fahrzeuggeschwindigkeit $\hat{V}_F$ und/oder dem absoluten Radschlupf entsprechende Signale abgeben.

**Patentansprüche**

1. Verfahren zur Bestimmung der Geschwindigkeit eines gebremsten Fahrzeuges und/oder der freirollenden Umfangsgeschwindigkeit von wenigstens einem der Fahrzeugräder unter Zuhilfenahme der Messung der augenblicklichen Radgeschwindigkeit, dadurch gekennzeichnet, daß zeitweise während eines Anpassungstandes der Bremsdruck an wenigstens einem Fahrzeugrad derart abgesenkt wird, daß sich der Arbeitspunkt des Rades im weitgehend linearen Bereich der Kennlinie Bremskraft in Abhängigkeit vom Radschlupf befindet, daß in diesem Anpassungszustand aus der augenblicklichen Radgeschwindigkeit $V_{Ri}$ und der Bremskraft $F_{Bi}$ an dem zugehörigen Rad i dessen freirollende Umfangsgeschwindigkeit $V_{fRi}$ ermittelt wird, daß hieraus unter Einbeziehung der Meßgrößen Lenkwinkel $\delta$ und Gierwinkelgeschwindigkeit $\dot{\psi}$ um die Fahrzeughochachse sowie des Schräglaufwinkels $\alpha i$ der Räder und der Fahrzeugabmessungen eine auf einen Punkt des Fahrzeugs bezogene Fahrzeuggeschwindigkeit $\hat{V}_F'$ ermittelt wird, daß mittels der Filtergleichungen

$$\frac{d\hat{V}_F}{dt} = \hat{b}_0 + b(t) + K_1 \cdot (V_F{'} - \hat{V}_F) \quad \text{und}$$

$$\frac{d\hat{b}_0}{dt} = \qquad K_2 \cdot (V_F{'} - \hat{V}_F)$$

der Schätzwert für die Fahrzeuggeschwindigkeit $\hat{V}_F$ und den Beschleunigungsfehler $\hat{b}_0$ gewonnen werden und daß gegebenenfalls mit Hilfe des auf den Fahrzeugpunkt bezogenen Schätzwerts $\hat{V}_F$ und den Größen Lenkwinkel $\delta$, Giergeschwindigkeit $\dot{\psi}$ und Schräglaufwinkel $\alpha i$ sowie der Fahrzeugabmessungen bezogen auf den Fahrzeugpunkt wenigstens ein Schätzwert $\hat{V}_{fRi}$ für die freirollende Geschwindigkeit dieses Rads gewonnen wird, wobei

$$b(t) = \frac{1}{m_F} \sum_{i=1}^{4} F_{Bi}(t)$$

die aus der Fahrzeugmasse $m_F$ und den Bremskräften geschätzte Fahrzeugbeschleunigung, $\hat{b}_0$ ein Fehlerterm und $K_1$ und $K_2$ Korrekturverstärkungen sind, die in Anpassungszustand positiv sind und außerhalb dieses Zustands 0 werden.

2. Verfahren nach Anspruch 1, dadurch gekennzeichnet, daß aus dem Meßwert der Radgeschwindigkeit und der geschätzten freirollenden Radgeschwindigkeit der Radschlupf S ermittelt wird.

3. Verfahren nach Anspruch 1 oder 2, dadurch gekennzeichnet, daß der Schräglaufwinkel durch einen Beobachter geschätzt wird.

4. Verfahren nach einem der Ansprüche 1 - 3, dadurch gekennzeichnet, daß die Bremskräfte mittels der Bremsdrücke bestimmt werden.

5. Verfahren nach Anspruch 4, dadurch gekennzeichnet, daß Bremsdrücke gemessen werden.

6. Verfahren nach Anspruch 4, dadurch gekennzeichnet, daß die Bremsdrücke geschätzt werden.

7. Verfahren anch einem der Ansprüche 1 - 6, dadurch gekennzeichnet, daß in Phasen der Bremsdruckregelung auf einen Sollschlupf die Bremskräfte gefiltert werden.

8. Verfahren anch einem der Ansprüche 1 - 7, dadurch gekennzeichnet, daß die Bremskraftabsenkung vom Schräglaufwinkel abhängig ist.

9. Verfahren nach einem der Ansprüche 1 - 8, dadurch gekennzeichnet, daß die Bremskraftabsenkung vom vorhandenen Bremskraftniveau abhängt.

**Claims**

1. Method for determining the speed of a braked vehicle and/or the free-rolling peripheral speed of at least one of the vehicle wheels with the aid of measurement of the instantaneous wheel speed, characterised in that the brake pressure on at least one vehicle wheel is at times, during an adaptation condition, reduced in such a way that the working point of the wheel is located in the substantially linear range of the braking force characteristic as a function of wheel slip, in that the free-rolling peripheral speed $V_{fRi}$ of the wheel i is determined in this adaptation condition from the instantaneous wheel speed $V_{Ri}$ and the braking force $F_{Bi}$ at the associated wheel i, in that a vehicle speed $V_F{'}$ referred to a point of the vehicle is determined from this free-rolling peripheral speed $V_{fRi}$ by introducing the measured parameters of steering angle $\delta$ and yaw angular velocity $\dot{\psi}$ about the vehicle vertical axis, the skew running angle $\alpha i$ of the wheels and the vehicle dimensions, in that the estimated value for the vehicle speed $\hat{V}_F$ and the acceleration error $\hat{b}_0$ are obtained by means of the filter equations

$$\frac{d\hat{V}_F}{dt} = \hat{b}_0 + b(t) + K_1 \cdot (V_F' - \hat{V}_F)$$

$$\frac{d\hat{b}_0}{dt} = K_2 \cdot (V_F' - \hat{V}_F) \qquad \text{and}$$

and in that, if necessary with the aid of the estimated value $\hat{V}_F$ referred to the vehicle point and the steering angle $\delta$, yaw rate $\dot{\psi}$ and skew running angle $\alpha i$ parameters, together with the vehicle dimensions referred to the vehicle point, at least one estimated value $\hat{V}_{fRi}$ is obtained for the free-rolling speed of this wheel, where

$$b(t) = \frac{1}{m_F} \sum_{i=1}^{4} F_{Bi}(t)$$

is the acceleration estimated from the vehicle mass $m_F$ and the braking forces, $\hat{b}_0$ is an error term and $K_1$ and $K_2$ are correction amplifications which are positive in the adaptation condition and are zero outside this condition.

2. Method according to Claim 1, characterised in that the wheel slip S is determined from the measured value of the wheel speed and the estimated free-rolling wheel speed.

3. Method according to Claim 1 or 2, characterised in that the skew running angle is estimated by an observer unit.

4. Method according to one of Claims 1-3, characterised in that the braking forces are determined by means of the brake pressures.

5. Method according to Claim 4, characterised in that brake pressures are measured.

6. Method according to Claim 4, characterised in that the brake pressures are estimated.

7. Method according to one of Claims 1-6, characterised in that the braking forces are filtered to a required slip in brake pressure control phases.

8. Method according to one of Claims 1-7, characterised in that the braking force reduction depends on the skew running angle.

9. Method according to one of Claims 1-8, characterised in that the braking force reduction depends on the braking force level present.

**Revendications**

1. Procédé pour déterminer la vitesse d'un véhicule freiné et/ou la vitesse périphérique de roulement libre d'au moins une des roues du véhicule en utilisant la mesure de la vitesse instantanée de la roue, procédé caractérisé en ce que de temps à autre, pendant un état d'adaptation, on abaisse la pression de frein sur au moins une roue du véhicule de façon que le point de fonctionnement de la roue se trouve très largement dans la plage linéaire de la caractéristique de la force de freinage en fonction du patinage de roue et dans cet état d'adaptation, partant de la vitesse instantanée de roue $V_{Ri}$ et de la force de freinage $F_{Bi}$ de la roue concernée i, on détermine sa vitesse périphérique de roulement libre $V_{fRi}$, et partant de là, en utilisant les grandeurs de mesure de l'angle de direction $\delta$ et de la vitesse de l'angle de giration $\dot{\psi}$ autour de l'axe vertical du véhicule ainsi que de l'angle de marche en biais $\alpha i$ des roues et des dimensions du véhicule, on détermine une vitesse de véhicule $V_F'$ rapportée à un point du véhicule, et en ce qu'à l'aide des équations

$$\frac{d\hat{V}_F}{dt} = \hat{b}_0 + b(t) + K_1 \cdot \left( V_F' - \hat{V}_F \right)$$

et

$$\frac{d\hat{b}0}{dt} = K_2 \cdot \left( V_F' - \hat{V}_F \right)$$

on obtient la valeur évaluée de la vitesse de véhicule $\hat{V}_F$ et le défaut d'accélération $\hat{b}_0$ et en ce que le cas échéant, à l'aide de la valeur évaluée $\hat{V}_F$ rapportée au point du véhicule et des grandeurs suivantes : angle de direction $\delta$, vitesse de giration $\dot{\psi}$ et angle de marche en biais $\alpha i$ ainsi que des dimensions du véhicule rapportées au point du véhicule, on forme au moins une valeur évaluée $\hat{V}_{fRi}$ de la vitesse de roulement libre de cette roue, avec :

$$b(t) = \frac{1}{m_F} \sum_{i=1}^{4} F_{Bi(t)}$$

relation qui utilise la masse $m_F$ du véhicule et les forces de freinage évaluées à partir de l'accélération du véhicule, $\hat{b}_0$ représentent un terme d'erreur et $K_1$ et $K_2$ des coefficients de correction qui sont positifs à l'état d'adaptation et en dehors de cet état sont égaux à 0.

2. Procédé selon la revendication 1, caractérisé en ce qu'à partir de la valeur mesurée de la vitesse de roue et de la vitesse évaluée de la roue roulant librement, on forme le patinage de roue S.

3. Procédé selon la revendication 1 ou 2, caractérisé en ce que l'on évalue l'angle de marche en biais avec un observateur.

4. Procédé selon l'une des revendications 1 à 3, caractérisé en ce qu'on détermine les forces de freinage à l'aide des pressions de frein.

5. Procédé selon la revendication 4, caractérisé en ce qu'on mesure la pression de frein.

6. Procédé selon la revendication 4, caractérisé en ce qu'on évalue la pression de frein.

7. Procédé selon l'une des revendications 1 à 6, caractérisé en ce que, dans les phases de régulation de pression de frein, on filtre les forces de frein sur un patinage de consigne.

8. Procédé selon l'une des revendications 1 à 7, caractérisé en ce que l'abaissement de la pression de frein dépend de l'angle de marche en biais.

9. Procédé selon l'une des revendications 1 à 8, caractérisé en ce que l'abaissement de la pression de frein dépend du niveau existant de la force de frein.

Fig.1

Fig.2a

Fig.2b

Fig.3

Fig.4